Europäisches Patentamt

European Patent Office

Office européen des brevets

(11) Veröffentlichungsnummer: **0 405 536 A2**

## (12) EUROPÄISCHE PATENTANMELDUNG

(21) Anmeldenummer: **90112331.5**

(22) Anmeldetag: **28.06.90**

(51) Int. Cl.⁵: **B29C 61/08, B29C 49/04, B29C 49/34, //B29K105:02, B29L31:56**

(30) Priorität: **30.06.89 DE 3921587**

(43) Veröffentlichungstag der Anmeldung: **02.01.91 Patentblatt 91/01**

(84) Benannte Vertragsstaaten: **AT DE ES FR GB GR IT**

(71) Anmelder: **Rydmann, Theo**
**Im Sotter 41**
**D-6719 Hettenleidelheim(DE)**

(72) Erfinder: **Rydmann, Theo**
**Im Sotter 41**
**D-6719 Hettenleidelheim(DE)**

(74) Vertreter: **Dr. Fuchs, Dr. Luderschmidt**
**Dipl.-Phys. Seids, Dr. Mehler Patentanwälte**
**Abraham-Lincoln-Strasse 7, Postfach 4660**
**D-6200 Wiesbaden(DE)**

(54) Verfahren zum Herstellen schrumpffähiger Flaschenkapseln aus thermoplastischem Kunststoff und Vorrichtung zur Durchführung des Verfahrens.

(57) Auf einen Flaschenhals aufschrumpfbare Flaschenkapseln (1) werden im Blasverfahren hergestellt. Ein extrudierter Kunststoffschlauch 2 wird in einer Konditionierungsstrecke (9) auf Vorbedingungen für das Blasformen eingestellt, die über den Schlauchumfang und die Schlauchlänge gleichmäßig sind, und zwar in thermoelastischem Zustand des thermoplastischen Kunststoffs. Aus der Konditionierungsstrecke (9) gelangt der Kunststoffschlauch (2) tangential in Bewegung vertikal von oben nach unten in eine geöffnete Blasform, vorzugsweise Doppelblasform (3a). Die Doppelblasformen (3a) besitzen eine Einschnürung (7), in welche eine beweglich gelagerte Blaspinole (8) einsticht und die Verformung des Kunststoffschlauches (2) derart vollzieht, daß nur radiale Aufweitung des Schlauches und stärkste Streckung im Bereich des späteren Kapselöffnungsrandes erfolgen. Die Doppelblasformen (3a) sind in einem Rotationstisch (4) gelagert, der kontinuierlich um eine horizontale Achse angetrieben wird.

Fig. 4

# VERFAHREN ZUM HERSTELLEN SCHRUMPFFÄHIGER FLASCHENKAPSELN AUS THERMOPLASTISCHEM KUNSTSTOFF UND VORRICHTUNG ZUR DURCHFÜHRUNG DES VERFAHRENS

Die Erfindung betrifft ein Verfahren zum Herstellen schrumpffähiger Flaschenkapseln aus thermoplastischem Kunstoff im Blasverfahren, bei welchem ein Schlauch aus dem thermoplastischen Kunststoff mit kleinerem Durchmesser als die herzustellenden Flaschenkapseln extrudiert und in teilbaren Blasformen in die Flaschenkapseln enthaltenden Abschnitten aufgeweitet wird und die Flaschenkapseln aus diesen verformten Schlauchabschnitten abgetrennt werden.

Die Erfindung betrifft ferner eine Vorrichtung zur Durchführung dieses Verfahrens.

Es sind Flaschenkapseln aus Kunststoff-Schrumpffolie bekannt, deren Kapselmantel nahtlos aus einem Kunststoffschlauch hergestellt ist. Hierzu wird der Kunststoffschlauch anschließend an das Extrudieren durch Aufblähen gedehnt und gekühlt, wobei die Schlauchwandung sowohl in Umfangsrichtung als auch axial gestreckt wird. Von solchem Schlauch werden Abschnitte gewünschter Länge geschnitten und über einen Formdorn in eine konische Form vorgeschrumpft (DE-U-6 809 330, FR-A-1 424 731). Diese Herstellung von aufschrumpfbaren Flaschenkapseln bedingt aber erhebliche Nachteile. Der Herstellungsvorgang ist nicht nur teuer, er erfordert auch spezielle Einrichtungen, um die geschnittenen Schlauchabschnitte in der Massenherstellung auf den Formdorn richtig aufzusetzen. Die Tatsache, daß beim Aufblähen des Schlauches die Schlauchwandung sowohl in Umfangsrichtung als auch in Längsrichtung des Schlauches, also biaxial gereckt wird, hat zur Folge, daß die Kapsel beim Aufschrumpfen auf den Flaschenhals auch biaxial schrumpft, so daß angebrachte Aufdrucke verzerrt werden. Diese Verzerrungen lassen sich nicht in ausreichendem Maße vorbestimmen, um den Abdruck darauf abstimmen zu können. Außerdem bilden sich beim Aufschrumpfen solcher Kapseln auf den Flaschenhals am unteren Kapselrand bogenförmige Ausbuchtungen, welche die Zierwirkung der Kapsel beeinträchtigen.

Es ist auch aus US-A-2 790 286 bekannt, zylindrische Ringe aus schrumpffähiger Folie zu bilden, wobei man eine nur in einer Richtung, also monoaxial und zwar in Querrichtung gereckte Folienbahn aus thermoplastischem Kunststoff durch Überlappen und Zusammenkleben der Seitenränder zu einem Schlauch formt, und diesen Schlauch in Abschnitte unterteilt. Dieses Herstellungsverfahren erscheint zunächst besonders einfach. Es führt aber nur zu zylindrischen Schlauchabschnitten, die entweder nur zum Verkapseln spezieller Behälter z.B. Schulterflaschen mit kurzem Hals oder aber unter Verwendung spezieller Verkapselungseinrichtung verwendbar sind.

Es ist ferner aus DE-C-722 225 bekannt, Schrumpfringe und Schrumpfkapseln unter vorherigem Schneiden von Kapselzuschnitten zu bilden, wobei der Ring oder die Kapsel vorteilhaft in der Weise geklebt werden soll, daß die Richtung der größten Dehnung oder Streckung senkrecht zur Achse des geformten Hohlkörpers liegt. Zur Bildung einer Kapsel mit Kapselboden soll bei dieser bekannten Herstellungsweise ein Ringende des vorher geklebten ringförmigen Hohlkörpers durch Aufkleben eines gereckten Scheibchens aus gleichem Stoff, das außerdem mit Bördeln versehen sein kann, verschlossen werden. Auch die auf diese Weise hergestellten Schrumpfringe und Schrupfkapseln haben erhebliche Nachteile, weil sie in der Herstellung teuer sind und nicht die für die Zierwirkung erforderliche sichere Halterung auf dem Flaschenhals während des Aufschrumpfens haben.

Es ist aus DE-B-2 057 901 noch ein weiteres Verfahren bekannt, nach welchem aus einer monoaxial gereckten, bedruckten Folie Zuschnitte zur Herstellung jeweils einer Flaschenkapsel mit Orientierung der gewünschten Umfangsrichtung der herzustellenden Kapsel in Reckrichtung der Folie geschnitten werden, wobei jeder dieser Zuschnitte an seinen beiden Seitenkanten zu einem kegelstumpfförmigen Vorformling verklebt und jeder dieser Vorformlinge auf einem in ihn eingeführten Formdorn unter jeweiligem Freisetzen der umfänglichen Reckung der Folie in die fertige, am engeren Ende einen einwärts gerichteten ringförmigen Flansch und einen Zentrierring aufweisenden Form der Flaschenkapsel vorgeschrumpft wird. Auch die nach diesem Verfahren hergestellten Flaschenkapseln sind teuer.

Schließlich ist aus DE-A-3 107 907 ein Verfahren zum Herstellen von Schrumpfartikeln kurzer Länge insbesondere Schrumpfkappen, -manschetten und dergleichen aus extrudierbaren Werkstoffen bekannt, wonach zunächst ein Vorformling gespritzt, bzw. extrudiert, anschließend vernetzt und in diesem vernetzten Zustand aufgeweitet und durch Abkühlen dieses aufgeweiteten Formlings durch "Einfrieren" fixiert werden soll. Dieses Verfahren ist aber praktisch nur bei Schrumpfartikeln mit größerer Wandstärke anwendbar, weil durch das Spritzen eines Vorformlings und anschließendes Vernetzen und Aufweiten bei dünnwandigen Hohlkörpern eine Gleichmäßigkeit der Wandstärke nicht sichergestellt werden kann, wie sie für schrumpffähige Flaschenkapseln notwendig ist.

Auch bei Blasformverfahren, wie sie gemäß US-A-3 146 491 für die Herstellung von Behältern, Flaschen, Flacons etc. empfohlen werden, ist die Anwendung für die Herstellung von schrumpffähigen Flaschenkapseln nicht möglich, weil der im Blasverfahren zu verformende Schlauch horizontal in die Blasformen eingeführt werden soll und infolge der Schwerkraft nach unten durchhängt. Dadurch wird nicht allein das exakte Einbringen des Schlauches in die Blasformen unmöglich gemacht, sondern auch im Kunststoff des Schlauches ein sich über den Schlauchumfang stark unterscheidender Ausgangszustand erzeugt.

Schließlich ist aus DE-B-1 479 494 ein Verfahren zum Herstellen von Hohlkörpern aus Kunststoff im Blasformverfahren bekannt. Nach diesem bekannten Verfahren herzustellenden Gegenstände sind jedoch keine schrumpffähigen Flaschenkapseln. Selbst wenn nach diesem Verfahren schrumpffähige Flaschenkapseln hergestellt werden sollten, würden diese nicht mit ihrem Öffnungsrand festanliegend an den Flaschenhals anschrumpfbar sein.

Dem gegenüber liegt der Erfindung die Aufgabe zugrunde, ein verbessertes Verfahren zum Herstellen von schrumpffähigen Flaschenkapseln zu schaffen, das sich durch einfache billige Durchführungsmöglichkeit auszeichnet und außerdem zu solchen schrumpffähigen Flaschenkapseln führt, die nur radial aufgeweitet sind und entsprechend auch nur radial schrumpfen und an ihrem Öffnungsrand ein festes Anschrumpfen an den Flaschenhals gewährleisten.

Diese Aufgabe wird gemäß der Erfindung dadurch gelöst, daß der extrudierte Schlauch sofort bei Einführen in die Blasformen an beiden Enden jedes gebildeten Abschnittes dicht zusammengepreßt wird, daß jeder Schlauchabschnitt spätestens innerhalb der Blasform in thermoelastischen Zustand übergeführt und in diesem Zustand durch Einführen von unter Druck stehenden Blasformmedium bis an die Innenfläche der Blasform aufgeweitet wird, wobei die größte radiale Aufweitung im Bereich des späteren Öffnungsrandes der Flaschenkapsel vorgenommen und unmittelbar neben diesem späteren Öffnungsrand in einem über die spätere Umfangswand der Flaschenkapsel hinausragenden Teil des Schlauchabschnittes eine Einschnürung eingeformt wird.

Durch das beidseitige dichte Verschließen des zu verformenden Schlauchabschnittes, kann sich dieser bei der Blasverformung nur in radialer Richtung dehnen, während die Abmessung in der Länge des Schlauchabschnittes unverändert bleibt. Eine derart hergestellte Flaschenkapsel kann also nur in radialer Richtung schrumpfen. Da die Flaschenkapsel nur in einer Richtung schrumpft, kann ein auf ihr angebrachtes Druckbild vorbestimmt aufgebracht werden. Durch das Überführen des thermoplastischen Kunststoffs des Schlauches bzw. Schlauchabschnittes in thermoelastischen Zustand vor Beginn der Blasverformung wird die radiale Aufweitung und Blähung optimal in eine Reckung übergeführt, die durch Schrumpfen rückgängig gemacht werden kann. Dieser gereckte Zustand wird beim Auftreffen der dünnen Schlauchwand auf die Blasformfläche eingefroren und bleibt bis zum Aufschrumpfen der Kapsel auf dem Flaschenhals erhalten. Schließlich wird durch das Einformen einer Einschnürung unmittelbar neben dem den späteren Öffnungsrand der Kapsel bildenden Bereich erreicht, daß an dem Öffnungsrand der Kapsel tatsächlich die stärkste Reckung erzielt und wirksam im Kunststoff des Kapselmantels eingefroren wird.

Um das wirksame Einfrieren der Reckung zu verbessern kann bevorzugt der Druck im Blasformmedium bis kurz vor dem Öffnen der jeweiligen Blasform im Inneren des Schlauchabschnittes aufrecht erhalten werden.

In vorteilhafter Ausführung des erfindungsgemäßen Verfahrens können in jeden Schlauchabschnitt zwei Flaschenkapseln mit ihren Öffnungsränder einander zugewandt eingeformt werden, wobei der zu einer Einschnürung geformte Teil des Schlauchabschnittes zwischen den einander zugewandten Öffnungsränder der beiden Flaschenkapseln angeordnet wird und das Einführen des Blasformmediums im Bereich dieser Einschnürung mittels einer dort einzustechenden Pinole vorgenommen wird. Abgesehen davon daß auf diese Weise jeweils zwei Flaschenkapseln in einem Formvorgang hergestellt werden, lassen sich die für das reine radiale Blähen des Schlauchabschnittes und das optimale Recken insbesondere im Bereich des Öffnungsrandes der Flaschenkapseln maßgeblichen Bedingungen bei dieser Verfahrensweise besonders günstig einstellen. Außerdem wird bei dieser Verfahrensweise der Anfall von Abfall bzw. Rückführungsmaterial auf ein Mindestmaß herabgesetzt.

Außerdem bietet diese bevorzugte Verfahrensweise besondere Vorteile bei der Weiterbehandlung der Formlinge insbesondere kann das Dekorieren, beispielsweise Bedrucken der Flaschenkapseln nach dem Entformen an den in die Schlauchabschnitte geformten Kapselpaaren besonders günstig vorgenommen werden.

Das erfindungsgemäße Verfahren läßt sich besonders günstig derart ausführen, daß die Flaschenkapseln sofort nach dem Herausschneiden aus den Schlauchabschnitten gestapelt und verpackt werden.

Für die Durchführung des erfindungsgemäßen Verfahrens eignet sich insbesondere eine Vorrichtung bei der ein Extruder mit Schlauchdüse und ein Rotationstisch vorgesehen sind, der mit Blasformen ausgerüstet ist und jeweils den einzelnen Blasformen zugeordnete Einstechpinolen für die Zuführung des Blasformmediums aufweist.

Erfindungsgemäß ist diese Vorrichtung mit folgenden Merkmalen ausgestattet:

a) der Rotationstisch ist mit den darauf montierten Blasformen um eine horizontale Achse kontinuierlich bewegbar,

b) Der extrudierte Kunststoff-Schlauch ist senkrecht und tangential den geöffneten Blasformen zuführbar,

c) jede Blasform ist an ihren beiden axialen Enden mit Einrichtungen zum Unterteilen des Kunststoff-Schlauches in Schlauchabschnitte und beidseitiges dichtes Verschließen dieser Schlauchabschnitte durch Zusammenpressen versehen,

d) jede Blasform weist anschließend an den den Önnungsrand der Flaschenkapseln formenden Bereich eine Einschnürung auf,

e) der Einschnürung ist die einstechbare Blaspiole zugeordnet.

Diese erfindungsgemäße Vorrichtung zeichnet sich durch besonderen sicheren und raschen Arbeitsablauf aus, so daß mit ihr die erfindungsgemäßen schrumpfbaren Flaschenkapseln als billige Massenartikel herstellbar sind.

Bevorzugt wird bei dieser Vorrichtung die Einstellung des Kunststoffes in dem extrudierten und zu Blasformen zu verarbeitenden Schlauches in thermoelastischen Zustand bereits zwischen dem Extrudieren des Schlauches und dem Einführen in die Blasformen des Rotationstisches ausgeführt. Dadurch wird erreicht, daß auch bei raschem Betriebsablauf die sichere Einstellung des thermoelastischen Zustandes sichergestellt ist.

In bevorzugter Ausführungsform der erfindungsgemäßen Vorrichtung ist jede Blasform als Doppelblasform für zwei zusammenhängende, als Doppelkonus ausgebildete axial hintereinanderliegende und mit dem Kapselöffnungsrand einanderzugewandte Flaschenkapseln ausgebildet, wobei die Einschnürung im axialmittigen Bereich der Doppelblasform zwischen den die Öffnungsränder der beiden Flaschenkapseln bildenden formbereichen gebildet ist. Die Einschnürung ist etwas größer als der extrudierte Schlauchdurchmesser gehalten. Diese Einschnürung bewirkt, daß der Schlauchabschnitt dort zuerst ausgeformt und verfestigt wird und sich in benachbarten Bereich das Kunststoffmaterial des Schlauches zur Bildung des Öffnungsrandes der Flaschenkapsel sehr stark dehnen muß, so daß dieser Bereich auch am stärksten schrumpft und sich die Flaschenkapsel mit ihrem Rand fest am Flaschenhals anlegt. Die Blaspinole sticht in einem Bereich ein, welcher von der eigentlichen Flaschenkapsel abgetrennt wird und dieselbe nicht irgendwie negativ beeinflußt. Sie verbleibt während der gesamten Blaszeit und Haltezeit in der Einschnürung und wird erst kurz vor der Entleerungsstation also nach der Erstarrungszeit aus dieser in die Ausgangsposition zurückgezogen.

Mehrere Blasformen bzw. mehrere Doppelblasformen können bevorzugt auf dem Rotationstisch einen geschlossenen Kreis bilden und bandförmig miteinander verbunden sein. Dadurch können die Blasformen bzw. Doppelblasformen am Rotationstisch derart angeordnet sein, daß der Kunststoffschlauch jeweils tangential in diese einläuft. Der tangentiale Einlauf bedingt, daß der extrudierte Schlauch beim Schließen der aufeinanderfolgenden Blasformen nur eine geringe Seitenbewegung ausführen muß.

In jeder Blasform bzw. Doppelblasform können Einrichtungen zum Formen einer Aufreißlasche an jeder Flaschenkapsel vorgesehen sein.

Im Hinblick auf ihre hohe Betriebssicherheit bietet die erfindungsgemäße Vorrichtung auch die Möglichkeit zwei oder mehrere achsparallel angeordnete Extruder für Kunststoffschläuche vorzusehen und den Rotationstisch mit zwei oder mehreren parallel nebeneinander angeordneten, die extrudierten Schläuche aufnehmenden Rotoren mit Blasformen bzw. Doppelblasformen auszustatten. Auf diese Weise läßt sich die Leistung der Vorrichtung ohne Verminderung ihre Betriebsicherheit und ohne Minderung der Qualität der hergestellten Flaschenkapseln vervielfachen.

Im Bereich des Rotationstisches kann eine Entleerungsstation vorgesehen sein. Wenn es erwünscht ist, die hergestellten Flaschenkapseln zu dekorieren beispielsweise zu bedrucken, kann anschließend an diese Entleerungsstation des Rotationstisches eine Einrichtung zum Dekorieren beispielsweise Bedrucken der noch im jeweiligen Schlauchabschnitt befindlichen Flaschenkapseln vorgesehen sein.

Das Heraustrennen der Flaschenkapseln aus den Schlauchabschnitten kann bei der erfindungsgemäßen Vorrichtung mit einem unmittelbar darauf folgenden Stapeln kombiniert werden, damit die Flaschenkapseln, die in den Schlauchabschnitten in Art von Vorformlingen noch relativ stabil und geschützt gehalten sind, nach dem Heraustrennen aus den Schlauchabschnitten sofort durch das Einführen in stangenförmige Stapel erneut geschützt sind. Hierzu kann gemäß der Erfindung eine Schneideinrichtung zum Heraustrennen der Flaschenkapseln aus den Schlauchabschnitten sowie zur Abtrennung der Einschnürung und der Endputzen vorgesehen sein, an die sich eine Einrichtung zum stangenförmigen Stapeln der Flaschenkapseln anschließt.

Anhand eines in der Zeichnung dargestellten Ausführungsbeispieles soll die Erfindung näher erläutert werden. Es zeigen:

Fig. 1 eine Flaschenkapsel gemäß der Erfindung in Ansicht,

Fig. 2 eine Flaschenkapsel in Draufsicht,

Fig. 3 eine schematische Darstellung des Aufschrumpfvorganges,

Fig. 4 ein Querschnitt durch die Vorrichtung mit Rotationstisch und Konditionierstrecke,

Fig. 5 eine schematisch dargestellte Dekoriereinrichtung für die Flachenkapseln,

Fig. 6 eine Schneid- und Stapeleinrichtung, schematisch dargestellt,

Fig. 7 eine Draufsicht auf eine geöffnete Form mit Blaspinole in zurückgezogener Lage,

Fig. 8 eine Draufsicht auf eine geschlossene Form mit Blaspinole in Arbeitsstellung,

Fig. 9 eine Formhälfte in Seitenansicht mit eingestochener Blaspinole zu Blasbeginn und

Fig.10 eine Formhälfte in Seitenansicht mit Pinole gegen Blasende (Stützluft).

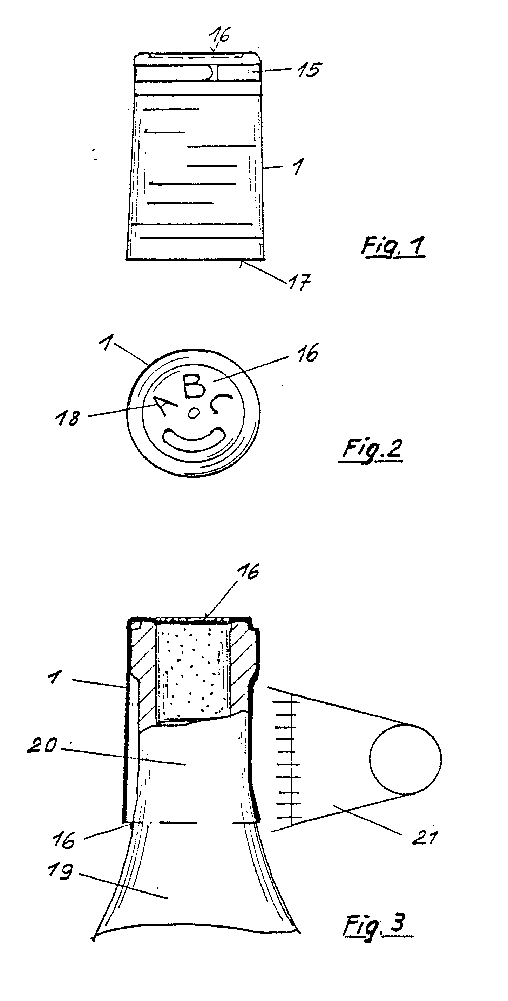

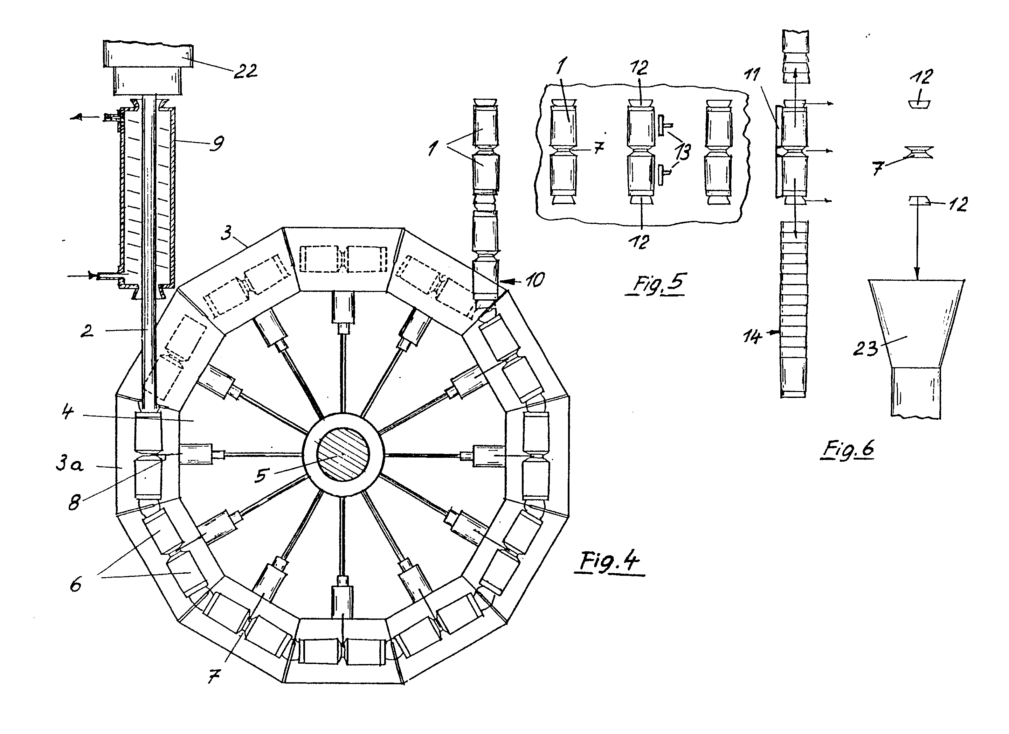

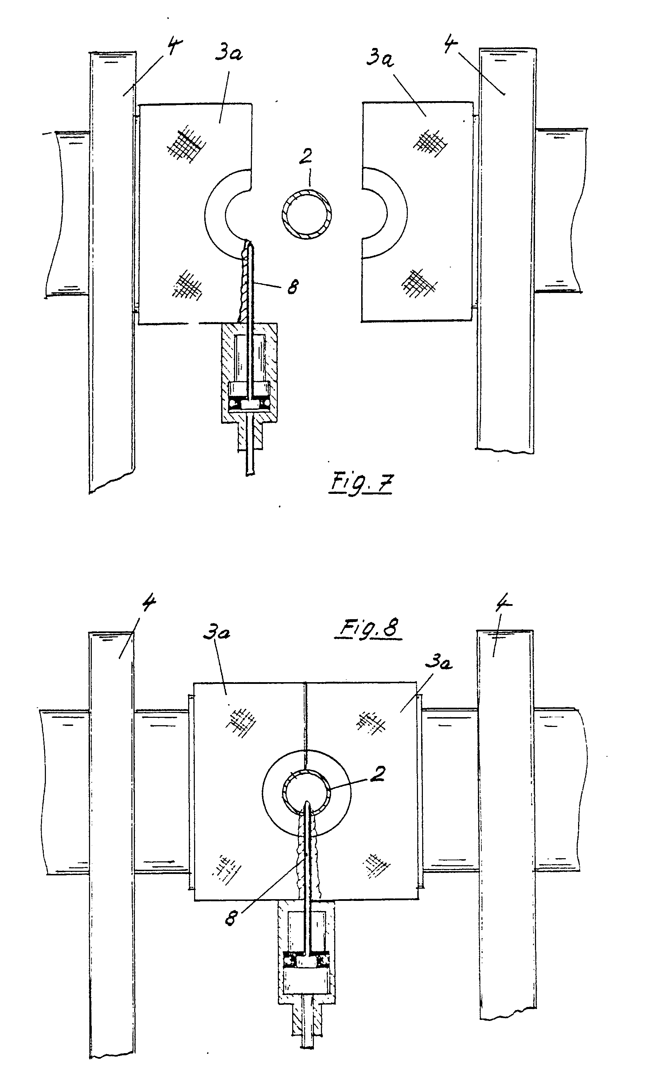

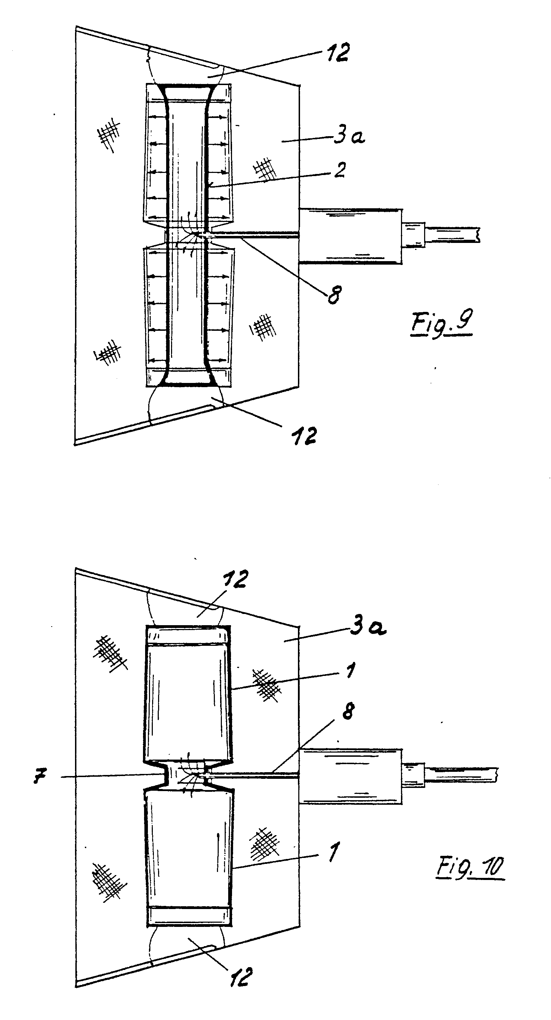

Die in der Fig. 1 dargestellte Flaschenkapsel 1 erweitert sich vom Kapselboden 16 ausgehend zum Kapselrand 17 leicht konisch. In der Nähe des Kapselbodens 16 ist eine Aufreißlasche 15 angeordnet. Der Kapselboden 16 kann eine Prägung 18 aufweisen, um die Flaschenkapsel 1 dekorativ zu gestalten; sie kann aber auch durch Symbole auf den Inhalt der Flasche 19 hinweisen. Nach dem Aufbringen der Flaschenkapsel 1 auf den Flaschenhals 20 wird der Schrumpfprozeß mittels einer Wärmequelle 21 in Gang gesetzt, wobei die Flasche 19 eine Drehbewegung vollführt, wenn diese an der Wärmequelle 21 vorbeigeführt wird. Da der Kapselboden 16 und der Kapselrand 17 erfindungsgemäß am meisten verstreckt sind - bedingt durch die Einschnürung 7 in der Doppelblasform 3a - schrumpfen diese Bereiche entsprechend ein, so daß sie satt am Flaschenhals 20 anliegen. Dadurch wird nicht nur die Zierwirkung der Flaschenkapsel 1 erhöht, sondern es werden auch die unschönen Ausbuchtungen am unteren Kapselrand 17 zuverlässig vermieden. Die Wärmequelle 21 kann als Heizstrecke ausgelegt sein, an welche die zu verkapselnden Flaschen 19 in Drehbewegung vorbeigeführt werden, sie kann aber auch als Heiztunnel ausgebildet sein. (Fig. 2 und Fig. 3).

Aus einem Extruder 22 (Fig. 4) wird ein Kunststoffschlauch 2 mit vorbestimmter Wandstärke und Durchmesser extrudiert, welcher eine Konditionierstrecke 9 durchläuft. Die Konditionierstrecke 9 hat die Aufgabe, den Kunststoffschlauch 2 im thermoelastischen Bereich zu homogenisieren, bevor derselbe in die geöffnete Doppelblasform 3a eintritt und abgeklemmt wird durch die sich schließenden Formteile. Die Doppelblasformen 3a sind auf einem Rotationstisch 4 montiert, der sich vorzugsweise um eine horizontale Achse 5 dreht. Der Rotationstische 4 ist derart zum extrudierten Kunststoffschlauch 2 angeordnet, daß dieser tangential in die geöffnete Doppelblasform 3a einlaufen kann. Dies hat den Vorteil, daß sich der Rotationstisch 4 kontinuierlich drehen kann. Dadurch verbilligt und vereinfacht sich nicht nur die Konstruktion der gesamten Vorrichtung, sondern es wird ferner der sehr weiche Kunststoffschlauch 2 nur in geringfügigem Maße aus der lotrechten Lage abgelenkt, so daß keine ungewollte Verformung desselben eintritt. Der Rotationstisch 4 kann beispielsweise mit zwölf Umdrehung pro Minute betrieben werden. Hierbei ergibt sich in der dargestellten Ausführungsform eine Kühlzeit von etwa 2,5 sec..

Die Doppelblasformen 3a sind so konzipiert und am Rotationstisch 4 montiert, daß sie eng aneinander liegen, so daß nur eine geringfügige Menge an Material für Putzen 12 verloren geht. Der extrudierte Kunststoffschlauch 2 wird nicht von Doppelblasform 3a zu Doppelblasform 3a durchtrennt. Er wird lediglich abgeklemmt, so daß es kein Kunststoffschlauchende gibt, welches unkontrolliert in die sich schließende Doppelblasform 3a gelangen kann. Sobald sich die Doppelblasform 3a geschlossen hat, sticht die Blaspinole 8 in die Einschnürung 7 der Doppelblasform 3a ein. Die einströmende Druckluft verformt das in der Doppelblasform eingeschlossene Schlauchstück in bekannter Weise. Da der Kunststoffschlauch beidseitig abgeklemmt ist und sich in Längsrichtung nicht ausdehnen kann, erfolgt eine Ausdehnung ausschließlich in radialer Richtung. Herbei liegt das größte Dehnungsmaß am Kapselrand 17, der im Bereich der Einschmürung 7 angeordnet ist. In den folgenden Stationen bzw. Drehbereichen wird die Stützluft aufrechterhalten bis zur Entleerungsstation 10. Vor dem Erreichen derselben wird die Blaspinole 8 zurückgezogen. (Fig. 7 bis 10). Es können auch zwei oder mehrere Kunststoffschläuche nebeneinander extrudiert werden, wenn ebenso viele Doppelblasformen 3a auf der Drehachse 5 tischförmig angeordnet sind.

Die Fig. 5 zeigt eine schematisch dargestellte Dekoriereinrichtung 13 zum Bedrucken etc. der Flaschenkapseln 1, die noch in Form eines Doppelkonuses 6 zusammenhängen.

Die Fig. 6 zeigt eine schematisch dargestellte Schneid- und Stapeleinrichtung 11. Hier werden die Einschnürung 7 und die Endputzen 12 abgerennt und die anfallenden Flaschenkapseln 1 nach links und rechts in Stangenform durch eine Stapeleinrichtung 14 gestapelt. Die Stapeleinrichtung kann mit einem Zählwerk verbunden sein, so daß die Flaschenkapseln 1 in Stangenform z.B. von 100 Stück ausgestoßen werden ebenso, wie die Putzen 12 und die Einschnürungsstücke 7 in dafür vorgesehene Behälter 23 entsorgt werden können. Die in Stangenform anfallenden Flaschenkapseln 1 können sofort verpackt werden, weil keine weiteren Nacharbeiten erforderlich sind.

**Ansprüche**

1.) Verfahren zum Herstellen schrumpffähiger Flaschenkapseln aus thermoplastischem Kunststoff im Blasverfahren, bei welchem ein Schlauch aus dem thermoplastischen Kunststoff mit kleinerem Durchmesser als die herzustellenden Flaschenkapseln extrudiert und in teilbaren Blasformen in die Flaschenkapseln enthaltenden Abschnitten aufgeweitet wird und die Flaschenkapseln aus diesen verformten Schlauchabschnitten abgetrennt werden, dadurch gekennzeichnet, daß der Kunststoffschlauch sofort bei Einführen in die Blasformen an beiden Enden jedes Abschnittes dicht zusammengepreßt wird, daß jeder Schlauchabschnitt spätestens innerhalb der Blasform in thermoelastischen Zustand übergeführt und in diesem Zustand durch Einführen von unter Druck stehendem Blasformmedium bis an die Innenfläche der Blasform aufgeweitet wird, wobei die größte radiale Aufweitung im Bereich des späteren Öffnungsrandes der Flaschenkapsel vorgenommen wird und unmittelbar neben diesem späteren Öffnungsrand in einem über die spätere Umfangswand der Flaschenkapsel hinausragenden Teil des Schlauchabschnittes eine Einschnürung eingeformt wird.

2.) Verfahren nach Anspruch 1, dadurch gekennzeichnet, daß der Druck des Glasformmediums bis kurz vor dem Öffnen der jeweiligen Blasform zum Herausnehmen des Formlings im Inneren des Schlauchabschnittes aufrechterhalten wird.

3.) Verfahren nach Anspruch 1 oder 2, dadurch gekennzeichnet, daß das Einstellen des extrudierten Schlauches in den thermoelastischen Bereich seines Materials vor dem Einführen in die Blasform vorgenommen wird.

4.) Verfahren nach einem der Ansprüche 1 bis 3, dadurch gekennzeichnet, daß in jeden Schlauchabschnitt zwei Flaschenkapseln mit ihren Öffnungsrändern einander zugewandt eingeformt werden, wobei der zu einer Einschnürung geformte Teil des Schlauchabschnittes zwischen den einander zugewandten Öffnungsrändern der beiden Flaschenkapseln angeordnet wird und das Einführen des Blasformmediums im Bereich dieser Einschnürung mittels einer dort einzustechenden Pinole vorgenommen wird.

5.) Verfahren nach einem der Ansprüche 1 bis 4, dadurch gekennzeichnet, daß das Dekorieren, beispielsweise Bedrucken, der Flaschenkapseln nach dem Endformen an den in die Schlauchabschnitte eingeformten Flaschenkapseln vor deren Heraustrennen vorgenommen wird.

6.) Verfahren nach einem der Ansprüche 1 bis 5, dadurch gekennzeichnet, daß die Flaschenkapseln sofort nach dem Heraustrennen aus den Schlauchabschnitten zu stangenförmigen Stapeln zusammengeführt werden.

7.) Vorrichtung zur Durchführung des Verfahrens nach einem der Ansprüche 1 bis 6, mit einem Extruder, einer Schlauchdüse am Extruder, mit einem mit Blasformen ausgerüsteten Rotationstisch und mit je einer den einzelnen Blasformen zugeordneten Einstechpinole, dadurch gekennzeichnet, daß

a) der Rotationstisch (4) mit den darauf montierten Blasformen (3) um eine horizontale Achse (5) kontinuierlich bewegbar ist;

b) der extrudierte Kunststoff-Schlauch (2) vertikal und tangential den geöffneten Blasformen (3) zuführbar ist;

c) jede Blasform (3) an ihren beiden axialen Enden mit Einrichtungen zum Unterteilen des Kunststoff-Schlauches (2) in Schlauchabschnitte und beidseitiges dichtes Verschließen dieser Schlauchabschnitte durch Zusammenpreßen versehen ist;

d) jede Blasform (3) anschließend an den Öffnungsrand der Flaschenkapseln (1) formenden Bereich eine Einschnürung (7) aufweist und

e) der Einschnürung (7) die einstechbare Blaspinole (8) zugeordnet ist.

8.) Vorrichtung nach Anspruch 7, dadurch gekennzeichnet, daß jede Blasform (3) als Doppelblasform (3a) für zwei zusammenhängende, als Doppelkonus (6) ausgebildete, axial hintereinander liegende und mit den Kapselöffnungsrändern einander zugewandte Flaschenkapseln (1) ausgebildet ist, wobei die Einschnürung (7) im axial mittigen Bereich der Doppelblasform (3a) zwischen den die Öffnungsränder der beiden Flaschenkapseln (1) bildenden Formbereichen gebildet ist.

9.) Vorrichtung nach Anspruch 7 oder 8, dadurch gekennzeichnet, daß in jeder Blasform (3) oder Doppelblasform (3a) Einrichtungen zum Formen einer Aufreißlasche (15) an jeder Flaschenkapsel (1) vorgesehen sind.

10.) Vorrichtung nach einem der Ansprüche 7 bis 9, dadurch gekennzeichnet, daß mehrere Blasformen (3) bzw. mehrere Doppelblasformen (3a) auf dem Rotationstisch (4) einen geschlossenen Kreis bilden und bandförmig miteinander verbunden sind.

11.) Vorrichtung nach einem der Ansprüche 7 bis 10, dadurch gekennzeichnet, daß zwischen dem Extruder (22) und der jeweiligen in Position liegenden Blasform (3) des Rotationstisches (4) eine Konditionierungsstrecke (9) angeordnet ist, die zur Erzeugung des thermoelastischen Zustandes im Kunststoff des extrudierten Schlauches (2) ausgebildet bzw. einstellbar ist.

12.) Vorrichtung nach einem der Ansprüche 7 bis 11, dadurch gekennzeichnet, daß zwei oder mehrere achsparallel angeordnete Extruder (22) für Kunststoffschläuche (2) vorgesehen sind und der Rotationstisch (4) zwei oder mehrere parallel nebeneinander angeordnete, die extrudierten Schläuche (2) aufnehmende Rotoren mit Blasformen (3) bzw. Doppelblasformen (3a) aufweist.

13.) Vorrichtung nach einem der Ansprüche 7 bis 12, dadurch gekennzeichnet, daß anschließend an die Entleerungsstation (10) des Rotationstisches (4) eine Einrichtung (13) zum Dekorieren, beispielsweise Bedrucken, der noch im jeweiligen Schlauchabschnitt befindlichen Flaschenkapseln (1) vorgesehen ist.

14.) Vorrichtung nach einem der Ansprüche 7 bis 13, dadurch gekennzeichnet, daß eine Schneideinrichtung (11) zum Heraustrennen der Flaschenkapseln (1) aus den Schlauchabschnitten sowie zur Abtrennung der Einschnürung (7) und der Endputzen (12) vorgesehen ist, an die sich eine Einrichtung (14) zum stangenförmigen Stapeln der Flaschenkapseln (1) anschließt.

*Fig. 1*

*Fig.2*

*Fig. 3*

Fig.4

Fig.5

Fig.6

*Fig. 7*

*Fig. 8*

Fig.9

Fig. 10